# EUROPÄISCHE PATENTSCHRIFT

(11) **EP 2 933 521 B1**
(45) Veröffentlichungstag und Bekanntmachung des Hinweises auf die Patenterteilung: **13.09.2017**
(21) Anmeldenummer: 14191499.4
(22) Anmeldetag: 03.11.2014
(51) Int. Cl.: F16D 51/00, F16D 65/28, B60T 1/06, B60B 35/00

(54) **Fahrzeugachse**
Vehicle axle
Essieu de véhicule

(30) Priorität: 08.11.2013 DE 102013112293
(43) Veröffentlichungstag der Anmeldung: 21.10.2015
(73) Patentinhaber: BPW-Hungária Kft., 9700 Szombathely (HU)
(72) Erfinder: Vozár, János, 9700 Szombathely (HU)
(74) Vertreter: Bungartz Christophersen Partnerschaft mbB Patentanwälte

(56) Entgegenhaltungen:
- WO-A1-01/46600
- US-A- 3 269 494
- US-A- 3 497 037
- US-A- 5 624 011
- US-A1- 2002 089 141

## Beschreibung

Die Erfindung betrifft eine Fahrzeugachse mit einem Achskörper, einem in Verlängerung zu dem Achskörper angeordneten Achsschenkel zur Drehlagerung eines Fahrzeugrades und der Bremstrommel einer Fahrzeugbremse, einem mit dem Achsschenkel fest verbundenen Bremsträger, an dem gegen die Bremstrommel spreizbare Bremsbacken gelagert sind, einer sich parallel zum Achsschenkel erstreckenden Betätigungswelle zum Spreizen der Bremsbacken, die in Bezug auf den Bremsträger drehbeweglich angeordnet und hierzu drehbeweglich in einem bremsträgerfesten Rohr angeordnet ist, und einem Kraftglied zum Antrieb der Betätigungswelle, welches an einer Trägerkonsole angeordnet ist, die über mindestens eine Verschraubung mit dem Bremsträger verbunden ist, wobei Bestandteile der Verschraubung ein erstes und zweites Lochraster sind, mittels dessen die Trägerkonsole in mehr als einer Position mit dem Bremsträger verbindbar ist.

Mit Trommelbremsen bestückte Fahrzeugachsen dieses Bautyps sind bekannt, z. B. aus der eher schematischen Abbildung in der FR 2 335 359 A.

Für den Einsatz solcher Fahrzeugachsen in Nutzfahrzeuganhängern und damit in Fahrzeugen, die üblicherweise über eine Druckluftversorgung verfügen, dient üblicherweise als Kraftglied der Bremse ein druckluftbetriebener Bremszylinder in der Bauart als Membranzylinder. Dieser ist auf einer Trägerkonsole befestigt, die ihrerseits mit dem Bremsträger der Fahrzeugbremse fest verbunden ist. Das Kraftglied, insbesondere in der Bauart als druckluftbetriebener Membranzylinder, benötigt zu seiner Unterbringung entsprechenden Bauraum, wofür zumeist nur Platz vor, hinter oder über dem radseitigen Ende des Achskörpers zur Verfügung steht. Wo genau das Kraftglied sinnvoll positioniert werden kann, entscheidet sich letztlich über die konkrete bauliche Situation im Bereich der Fahrzeugachse.

Eine solche Fahrzeugachse ist beispielsweise in der WO 01/46600 A1 gezeigt, die einen an einem Achskörper festgelegten Bremsträger beinhaltet, an welchem eine untere Befestigungsplatte einer Trägerkonsole für einen Bremszylinder schraubfest montiert ist. Die Trägerkonsole besteht des Weiteren aus einem an der unteren Befestigungsplatte angeschweißten Halteschaft, sowie aus einer am oberen Ende des Schafts angeschweißten Befestigungsplatte. An der oberen Befestigungsplatte ist der Bremszylinder samt Betätigungshebel und Betätigungswelle befestigt. Die dargestellte Haltevorrichtung des Bremszylinders erlaubt jedoch keine flexible räumliche Justierung des Bremszylinders relativ zur Trommelbremse.

Auch in der US 3,269,494 ist eine Bremsenanordnung für eine Trommelbremse mit konventionellen Bremsbacken, einem Bremsträger und einer daran befestigten Buchse samt einer Betätigungswelle offenbart, die über einen Hebelarm in Kontakt mit einem pneumatischen Bremszylinder steht. Am Achskörper ist eine zylindrische Montageplatte angebracht, die umfänglich verlaufende Rippen besitzt. Diese stehen bei montierter Bremse mit an dem Bremsträger beziehungsweise in einer Zentralöffnung des Bremsträgers umfänglich angeordneten Rippen im Eingriff. Je nach Anforderung kann die Bremse gegen den Achskörper verdreht werden, wobei die Rippen die Verdrehweite vorgeben. Somit kann auch die räumliche Position des Bremszylinders relativ zum Achskörper variiert werden.

Für den Fahrzeugbauer kann diese bauliche Situation von Fahrzeug zu Fahrzeug unterschiedlich sein. Dies gilt vor allem auf dem Gebiet des Spezialfahrzeugbaus, etwa bei Agrarfahrzeugen.

Der Erfindung liegt daher die Aufgabe zugrunde, für das Kraftglied und insbesondere den druckluftbetriebenen Bremszylinder unterschiedliche Einbausituationen zu ermöglichen, ohne dass einzelne Bauteile entsprechend der jeweiligen baulichen Situation individuell angepasst werden müssen.

Zur Lösung dieser Aufgabe wird eine Fahrzeugachse mit den Merkmalen aus Patentanspruch 1 vorgeschlagen.

Mit der Erfindung wird dem Umstand Rechnung getragen, dass für den Fahrzeugbauer die bauliche Situation für die Anordnung des Bremszylinders von Fahrzeug zu Fahrzeug variieren sein kann. Dies gilt vor allem für Spezialfahrzeuge und auf Kundenwunsch gefertigte Fahrzeuge. Indem das Kraftglied an einer Trägerkonsole angeordnet ist, die wiederum über eine Verschraubung mit dem Bremsträger verbunden ist, lassen sich mit rein montagetechnischen Mitteln unterschiedliche, fahrzeugspezifische Einbausituationen bei der Unterbringung des Bremszylinders im Bereich der Fahrzeugachse realisieren.

Die Verschraubung erfolgt vorzugsweise über ein Lochraster, mittels dessen die Trägerkonsole in mehr als nur einer Position mit dem Bremsträger verbindbar ist. Auf diese Weise lassen sich unterschiedliche Einbausituationen bei der Unterbringung des Bremszylinders unter Verwendung weitgehend einheitlicher Bauteile realisieren. Um unterschiedliche Montagepositionen zu ermöglichen, ist es nicht erforderlich, einzelne Bauteile individuell entsprechend der jeweiligen baulichen Situation zu gestalten.

Gemäß einer weiteren Ausgestaltung der Fahrzeugachse ist die Betätigungswelle der Bremse drehbeweglich in einem bremsträgerfesten Rohr angeordnet, an dessen fahrzeuginnerem Ende eine das Lochraster aufweisende Flanschplatte befestigt ist, vorzugsweise durch Verschweißen mit dem Rohr. In diesem Fall kann die Flanschplatte mit einer Öffnung oder einer Ausnehmung versehen sein, durch die die Betätigungswelle hindurchgeführt ist.

Mit einer anderen Ausgestaltung wird vorgeschlagen, dass das Lochraster durch eine Lochreihe gebildet wird, die längs eines Kreisbogens angeordnet ist, dessen Kreismittelpunkt mit der Drehachse der Betätigungswelle zusammenfällt. Für eine besonders einfache Variation der möglichen Montagepositionen weisen die Löcher der Lochreihe gleiche Abstände zueinander auf.

Eine weitere Ausgestaltung des Lochrasters ist gekennzeichnet durch eine erste bremsträgerseitige Lochreihe, und eine zweite, an der Trägerkonsole ausgebildete Lochreihe, wobei die Lochabstände in der ersten Lochreihe identisch den Lochabständen in der zweiten Lochreihe sind.

Hinsichtlich der das Kraftglied aufnehmenden Trägerkonsole wird vorgeschlagen, dass sich diese aus einem ersten Konsolenschenkel, an dem das Lochraster ausgebildet ist, und einem rechtwinklig zu dem ersten Konsolenschenkel angeordneten zweiten Konsolenschenkel zusammensetzt, an dem das Kraftglied befestigt ist. Zwecks Verstärkung der Trägerkonsole wird ferner mindestens eine rechtwinklig zu beiden Konsolenschenkeln angeordnete Versteifungsrippe vorgeschlagen.

Von besonderem Vorteil ist die Erfindung bei einer Nachlauf-Lenkachse, wie sie zum Beispiel bei Anhängerfahrzeugen mit Doppel- oder Dreifachachse zum Einsatz kommt. Solche Nachlauf-Lenkachsen sind grundsätzlich bekannt, etwa aus der bereits genannten FR 2 335 359 A oder der DE 10 2010 036 417 A1.

Daher ist eine weitere Ausgestaltung der Fahrzeugachse gekennzeichnet durch einen am Ende des Achskörpers befestigten Lenklagerträger und einen den Achsschenkel und den Bremsträger aufweisenden Radträger, wobei der Radträger über einen gegenüber dem Lenklagerträger und/oder dem Radträger drehgelagerten Lenkbolzen relativ zu dem Lenklagerträger schwenkbar ist, und wobei die Lenkbolzenachse gegenüber der Drehachse des Fahrzeugrades in Fahrtrichtung vorversetzt angeordnet ist.

Weitere Vorteile und Einzelheiten ergeben sich aus der nachfolgenden Beschreibung eines Ausführungsbeispiels, wobei auf die Zeichnung Bezug genommen wird. Darin zeigen:

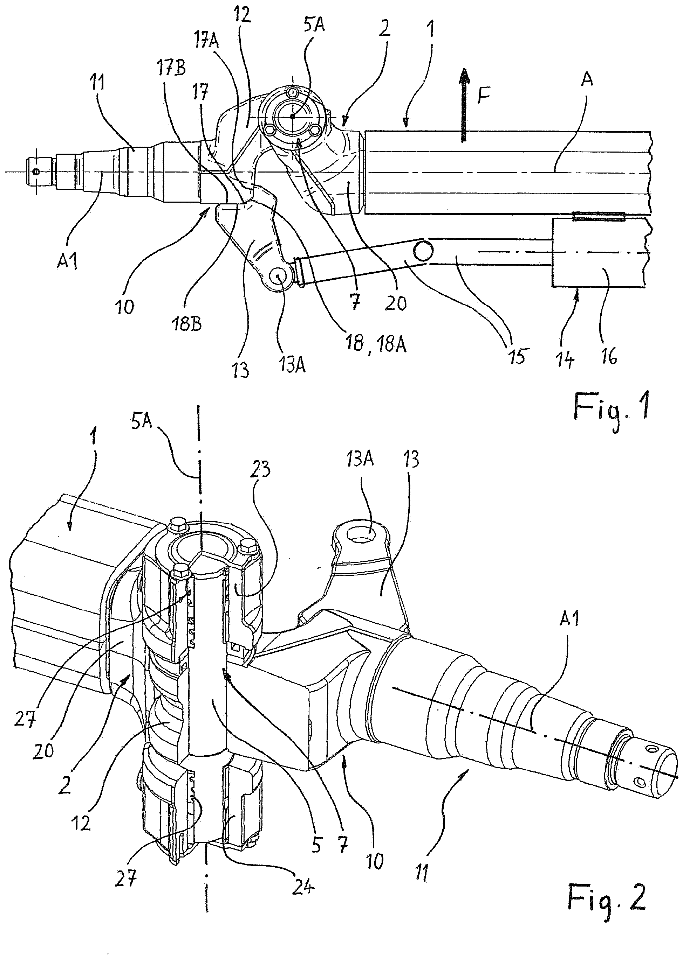

- Fig. 1: eine Draufsicht auf den in Fahrtrichtung linken Teil einer für ein Anhängerfahrzeug bestimmten Nachlauf-Lenkachse, wobei allerdings das Fahrzeugrad, dessen Radnabe und Einzelheiten der vorhandenen Radbremse nicht wiedergegeben sind;
- Fig. 2: die Gegenstände nach Fig. 1 aus anderer Blickrichtung und in perspektivischer, teils geschnittener Darstellung;

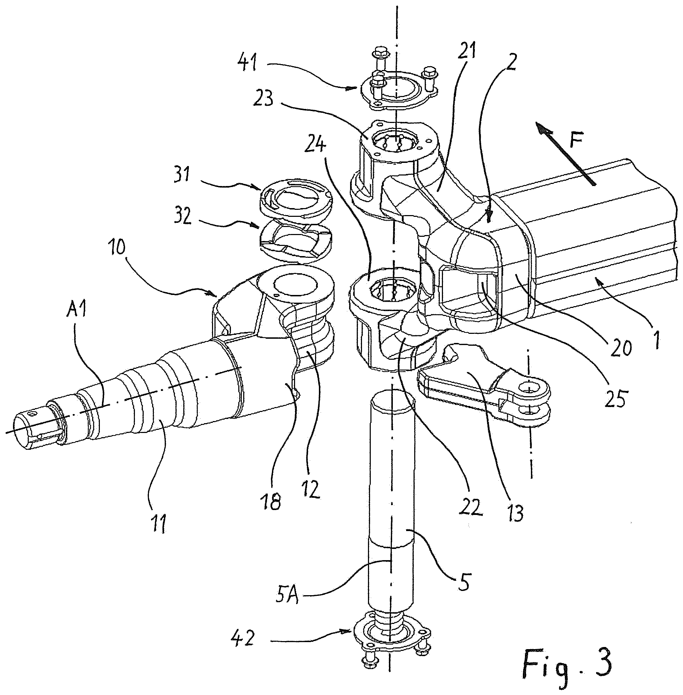

- Fig. 3: eine Explosionsdarstellung der Gegenstände nach Fig. 1;
- Fig. 4: eine der Fig. 1 entsprechende Draufsicht, diesmal einschließlich der Radnabe und der Elemente der als Trommelbremse ausgebildeten Radbremse, und
- Fig. 5: die Gegenstände nach Fig. 4 aus anderer Blickrichtung, wobei einzelne Elemente der Radbremse nach Art einer Explosionsdarstellung wiedergegeben sind.

Die Erläuterung der Erfindung erfolgt im Folgenden anhand einer gezogenen, d. h. nichtangetriebenen Nachlauf-Lenkachse, wie sie häufig in Fahrzeuganhängern zum Einsatz kommt. Die Figuren zeigen den in Fahrtrichtung F bei Vorwärtsfahrt linken Teil der Nachlauf-Lenkachse. Der in Fahrtrichtung rechte Teil der Nachlauf-Lenkachse ist in Bezug auf die Fahrzeugmittellinie symmetrisch angeordnet.

Ein Achskörper 1 in Gestalt eines sich über den größten Teil der Fahrzeugbreite erstreckenden Achsrohrs ist auf jeder Fahrzeugseite über einen nicht dargestellten Achslenker sowie den Luftbalg einer Luftfederung gegenüber dem Fahrzeugchassis abgestützt.

An jedem Ende des Achskörpers 1 ist ein als eigenständiges Bauteil ausgebildeter Lenklagerträger 2 starr befestigt. Der Lenklagerträger 2 bildet zusammen mit einem daran um eine vertikale Achse 5A schwenkbaren Radträger 10 ein den Lenkausschlag des Fahrzeugrades bestimmendes Lenklager 7. Zentrales Element des Lenklagers 7 ist ein Lenkbolzen 5, welcher sich zugleich durch eine Bohrung in dem Radträger 10, als auch durch eine erste Bohrung in dem Lenklagerträger 2 und durch eine zweite Bohrung in dem Lenklagerträger 2 erstreckt. Der Lenkbolzen 5 mit seiner Lenkbolzenachse 5A definiert daher die im Wesentlichen vertikale Schwenklinie der Lenkachse, um die herum der Lenkausschlag erfolgt.

Der einstückig als Schmiedeteil ausgebildete Radträger 10 setzt sich aus einem Achsschenkel 11 und einer Trägerfaust 12 zusammen. An dem Achsschenkel 11 sind ringförmige Flächen zur Aufnahme von Wälzlagern ausgebildet, auf denen die hier nicht dargestellte Radnabe mit dem Fahrzeugrad drehbar sitzt. Zusätzlich ist der Radträger 10 mit einer Befestigung für eine Trommelbremse versehen.

Die Trägerfaust 12 stellt die Verbindung zwischen dem die Achslinie A1 und damit die Drehachse des Fahrzeugrades definierenden Achsschenkel 11, und dem Lenklager 7 her. Wie die Zeichnungen erkennen lassen, ist, wie bei Nachlauf-Lenkachsen üblich, die Lenkbolzenachse 5A des Lenkbolzens 5 in Bezug auf die Drehachse A1 des Fahrzeugrades in Fahrtrichtung F vorversetzt angeordnet. Zugleich befindet sich die Achslinie A1 im Falle der Geradeausfahrt, wie sie auf den Zeichnungen wiedergegeben ist, genau in Fluchtung zu der Mittellinie A des Achskörpers 1.

Bestandteil des schwenkbaren Radträgers 10 ist ein daran vorzugsweise durch Anschweißen befestigter Lenkarm 13. Der Lenkarm 13 ist an seinem Ende mit einer Öse 13A versehen, über die er mit dem Lenkarm auf der anderen Fahrzeugseite durch ein Lenkgestänge 15 verbunden ist. Das Lenkgestänge 15 koppelt daher die beiden Radträger 10 mit der Folge, dass die Lenkausschläge der Radträger 10 auf der linken und der rechten Fahrzeugseite synchronisiert sind. Die Gelenke zwischen den Lenkarmen 13 und dem Lenkgestänge 15 sind vorzugsweise sphärische Gelenke oder mit verformbaren Elastomerbuchsen versehene Gelenke.

Für ein aktives Mitlenken der Fahrzeugachse vor allem bei Vorwärtsfahrt kann in das Lenkgestänge 15 ein hydraulisch betätigbarer Antriebszylinder 14 integriert sein, dessen Zylindergehäuse 16 dann starr an dem Achskörper 1 befestigt ist. Vorzugsweise ist der Antriebszylinder 14 in einer Mittelstellung sperrbar, in der das Lenkgestänge 15 für Geradeausfahrt eingestellt ist.

Der Lenkarm 13 ist mit einer Anschlussfläche 17 zur Verbindung mit einer Gegenfläche 18 versehen. Die Gegenfläche 18 befindet sich an dem Radträger 10 zwischen der Trägerfaust 12 und dem Achsschenkel 11. Eine Verbindungsschweißnaht ist längs beider Flächen 17, 18 gezogen. Beide Flächen 17, 18 setzen sich aus jeweils zwei Flächenabschnitten 17A, 17B bzw. 18A, 18B zusammen, die über Eck zueinander angeordnet sind, vorzugsweise in einem rechten Winkel.

Der als Gussteil oder Schmiedeteil ausgebildete Lenklagerträger 2 setzt sich einstückig aus einem Grundkörper 20 und zwei Gabelschenkeln 21, 22 zusammen. Zur starren Verbindung mit dem Achskörper 1 ist an dem Grundkörper 20 nach fahrzeuginnen hin ein Zapfen angeformt. Der Zapfen ist in das offene Ende des rohrförmigen Achskörpers 1 axial eingesteckt und weist eine Querschnittsform auf, die dem Innenquerschnitt des rohrförmigen Achskörpers 1 entspricht, wodurch in Umfangsrichtung ein Formschluss zwischen diesen beiden Teilen erzielt wird. Zusätzlich ist der Grundkörper 20 mit dem Achskörper 1 verschweißt, indem am Übergang zu dem Zapfen über den Umfang des Achsrohrs 1 eine Schweißnaht gezogen ist.

Die Gabelschenkel 21, 22 sind, ausgehend von dem Grundkörper 20, verkröpft gestaltet, und sie enden jeweils in einer Buchse 23, 24 zur drehbaren Aufnahme des jeweiligen Endes des Lenkbolzens 5. Die Verkröpfung der Gabelschenkel 21, 22 ist sowohl mit horizontaler Komponente in Fahrtrichtung F, als auch mit vertikaler Komponente nach oben (im Fall des oberen Gabelschenkels 21) bzw. nach unten (im Fall des unteren Gabelschenkels 22).

In Höhe zwischen den beiden Buchsen 23, 24 ist der Grundkörper 20 mit einer Ausnehmung 25 versehen, in die bei einer starken Auslenkung des Radträgers 10 der Lenkarm 13 teilweise eintauchen kann, so dass es in diesem Bereich zu keinem Kontakt zwischen dem Lenkarm 13 und dem Lenklagerträger 2 kommt. Zu diesem Zweck ist die Ausnehmung 25 vorzugsweise so angeordnet, dass sie entgegen der Fahrtrichtung F und in Richtung nach fahrzeugaußen offen ist.

In montiertem Zustand befindet sich die Trägerfaust 12 des Radträgers 10 zwischen den beiden Buchsen 23, 24 des Lenklagerträgers 2. In einer Bohrung, mit der die Trägerfaust 12 versehen ist, sitzt, vorzugsweise mit Passsitz, der mittlere Längsabschnitt des Lenkbolzens 5. Nach dem Einsetzen des Lenkbolzens 5 durchsetzt daher dessen mittlerer Längsabschnitt die Bohrung in der Trägerfaust 12, wohingegen die beiden Bolzenenden die Buchsen 23 bzw. 24 durchsetzen. Vorzugsweise sitzt die Lenkbolzenmitte über eine Presspassung in der Bohrung des Radträgers 10. Die Enden des Lenkbolzens sind jeweils über ein Lager 27, z. B. ein Gleitlager, innen in der Öffnung der jeweiligen Buchse 23, 24 abgestützt.

Zwischen der oberen Buchse 23 des Lenklagerträgers 2 und der Trägerfaust 12 des Radträgers 10 befinden sich auf der Lenkbolzenachse 5A zwei Wellenscheiben 31, 32. Die obere Wellenscheibe 31 ist drehfest gegenüber der Buchse 23, und die untere Wellenscheibe 32 ist drehfest gegenüber der Trägerfaust 12.

Durch die wellenförmige Kontur der axialen Kontaktflächen der beiden Wellenscheiben 31, 32 wird die Rückstellkraft der Nachlauf-Lenkachse erzielt. Diese Rückstellkraft ist stets dergestalt, dass eine Rückstellung in jenen Zustand erzielt wird, in dem die Nachlauf-Lenkachse in Geradeausfahrt arbeitet.

Über eine obere Verschraubung 41 und eine untere Verschraubung 42 ist der Lenkbolzen 5 in Axialrichtung, d. h. nach oben und nach unten, gesichert. Die Verschraubungen 41, 42 können außerdem dazu dienen, die Gleitlager 37 axial einzustellen und gegen einen Austritt von Lagerfett abzudichten.

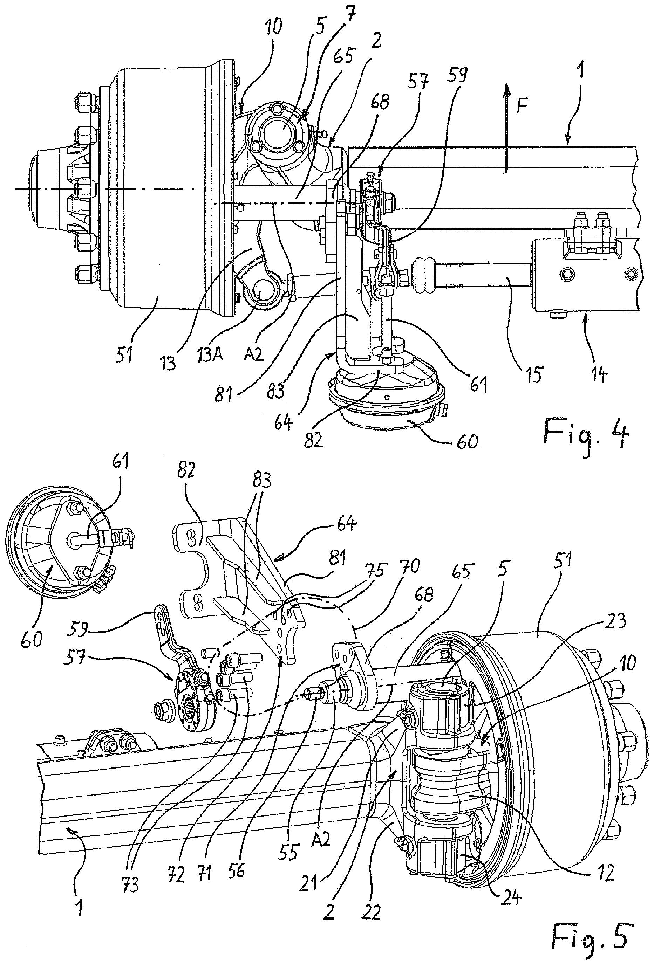

In den Figuren 4 und 5 sind zusätzlich Einzelheiten und Einzelteile der als Trommelbremse ausgebildeten Radbremse der Lenkachse wiedergegeben.

Starr an dem schwenkbaren Radträger 10 befestigt oder dessen integraler Bestandteil ist ein Bremsträger, an dem die beiden von innen gegen die Reibfläche der Bremstrommel 51 spreizbaren Bremsbacken der Trommelbremse gelagert sind. Um die beiden Bremsbacken nach außen zu spreizen, so dass sich deren Bremsbeläge von innen gegen die Bremstrommel 51 anlegen, ist an dem Bremsträger ein Spreiznocken gelagert. Durch Verdrehen des Spreiznockens bewegt dieser die beiden Bremsbacken voneinander weg, so dass sie von innen gegen die Reibfläche an der Bremstrommel 51 gepresst werden.

Der Spreiznocken ist drehfest am fahrzeugäußeren Ende einer sich parallel zum Achsschenkel 11 erstreckenden Betätigungswelle 55 angeordnet. Diese ist an ihrem anderen, also fahrzeuginneren Ende mit einem Verbindungszapfen 56 (Fig. 5) versehen, auf dem drehfest ein Nachstellhebel 57 sitzt, wie er häufig auch als Gestängesteller bezeichnet wird. Solche Nachstellhebel 57 beinhalten einen Nachstellmechanismus, durch den das mit dem Verschleiß an den Bremsbacken einhergehende, vergrößerte Lüftspiel der Bremse kompensiert wird.

Am freien Ende eines Hebelarms 59 des Nachstellhebels 57 greift gelenkig eine Betätigungsstange 61 eines druckluftbetriebenen Bremszylinders 60 an. Die ventilgesteuerte Druckluftversorgung des vorzugsweise als Membranzylinder ausgebildeten Bremszylinders erfolgt durch das bordeigene Druckluftsystems oder durch das Druckluftsystem des Zugfahrzeugs.

Der das Kraftglied der Bremse bildende Bremszylinder 60 ist in Bezug auf den Bremsträger und damit auch in Bezug auf den Radträger 10 starr angeordnet. Zu diesem Zweck ist der Bremszylinder 60 mittels Schrauben an einer Trägerkonsole 64 befestigt, die ihrerseits an einem Rohr 65 befestigt ist. Das Rohr 65 seinerseits ist starr an dem Bremsträger der Bremse befestigt und umgibt die innerhalb des Rohrs 65 um die Achse A2 drehbewegliche Betätigungswelle 55.

Am fahrzeuginneren Ende des Rohrs 65 ist eine Flanschplatte 68 befestigt. Die Flanschplatte 68 ist mit einer auf der Achse A2 der Betätigungswelle 55 angeordneten Öffnung oder Ausnehmung versehen, durch die die Betätigungswelle 55 und eventuell auch das fahrzeuginnere Ende des Rohrs 65 hindurchführt.

Die rechtwinklig zur Drehachse A2 der Betätigungswelle 55 angeordnete Flanschplatte 68 ist mit dem Rohr 65 verschweißt, wobei beim Verschweißen durch die Wahl der Winkellage der Flanschplatte 68 die Position der später an der Flanschplatte 68 befestigten Trägerkonsole 64 mitbestimmt wird.

An der Flanschplatte 68 ist die Trägerkonsole 64 mittels einer insgesamt mit dem Bezugszeichen 70 versehenen Verschraubung befestigt. Die Verschraubung 70 erfolgt parallel zur Drehachse der Betätigungswelle 55. Bestandteile der Verschraubung sind ein erstes Lochraster 71 in Gestalt einer ersten Lochreihe an der Flanschplatte 68, ein zweites Lochraster 72 in Gestalt einer zweiten Lochreihe an der Trägerkonsole 64, und eine ausreichende Zahl von Schrauben 73. Für eine den Belastungen durch den Bremszylinder 60 adäquate Verschraubung ist die Verwendung von mindestens zwei Schrauben 73 sinnvoll. Durch das so gestaltete Lochraster ist die Trägerkonsole 64 in mehr als nur einer Position mit der Flanschplatte 68 und damit mit dem Bremsträger der Radbremse verbindbar.

Gemäß Fig. 5 besteht jedes der zwei Lochraster aus einer Lochreihe 71, 72, deren Löcher 75 längs eines Kreisbogens angeordnet sind, wobei der Kreismittelpunkt dieses Kreisbogens mit der Drehachse A2 der Betätigungswelle 55 zusammenfällt.

Die Löcher 75 der Lochreihen weisen gleiche Abstände zueinander auf, wobei zusätzlich die Lochabstände der Löcher des ersten Lochrasters 71 identisch den Lochabständen der Löcher des zweiten Lochrasters 72 sind. Durch Hindurchstecken einer Schraube 73 zugleich durch ein Loch des ersten Lochrasters und ein dazu fluchtendes Loch des zweiten Lochrasters lässt sich die Trägerkonsole 64 in einer gewünschten Winkelposition, bezogen auf die Drehachse der Betätigungswelle 55, an der Flanschplatte 68 befestigen.

Nur beispielhaft zeigt Fig. 5 für das eine Lochraster 71 insgesamt drei Löcher 75, und für das andere Lochraster 72 insgesamt vier Löcher 75. Durch Auswahl der Lochpaarung lässt sich daher die Winkelposition der Trägerkonsole 64 vorwählen, bevor in die zur Deckung gebrachten Löcher Schrauben 73 eingesetzt werden.

Die Trägerkonsole 64 setzt sich zusammen aus einem ersten Konsolenschenkel 81, an dem das Lochraster 72 ausgebildet ist, und einem rechtwinklig zu dem ersten Konsolenschenkel 81 angeordneten zweiten Konsolenschenkel 82, an dem, über eine entsprechende Verschraubung, das Kraftglied 60 befestigt ist. Zur Verstärkung der Trägerkonsole 64 sind zwei Versteifungsrippen 83 vorgesehen.

### Bezugszeichenliste

- 1: Achskörper
- 2: Lenklagerträger
- 5: Lenkbolzen
- 5A: Lenkbolzenachse
- 7: Lenklager
- 10: Radträger
- 11: Achsschenkel
- 12: Trägerfaust
- 13: Lenkarm
- 13A: Öse
- 14: Antriebszylinder
- 15: Lenkstange
- 16: Zylindergehäuse
- 17: Anschlussfläche
- 17A: Flächenabschnitt
- 17B: Flächenabschnitt
- 18: Gegenfläche
- 18A: Flächenabschnitt
- 18B: Flächenabschnitt
- 20: Grundkörper
- 21: Gabelschenkel
- 22: Gabelschenkel
- 23: Buchse
- 24: Buchse
- 25: Ausnehmung
- 27: Lager
- 31: Wellenscheibe
- 32: Wellenscheibe
- 41: obere Verschraubung
- 42: untere Verschraubung
- 51: Bremstrommel
- 55: Betätigungswelle
- 56: Verbindungszapfen
- 57: Nachstellhebel
- 59: Hebelarm des Nachstellhebels
- 60: Kraftglied, Bremszylinder
- 61: Betätigungsstange
- 64: Trägerkonsole
- 65: Rohr
- 68: Flanschplatte
- 70: Verschraubung
- 71: Lochreihe, Lochraster
- 72: Lochreihe, Lochraster
- 73: Schraube
- 75: Loch

- A: Mittellinie
- A1: Achslinie
- A2: Drehachse der Betätigungswelle
- F: Fahrtrichtung

## Patentansprüche

1. Fahrzeugachse mit einem Achskörper (1), einem in Verlängerung zu dem Achskörper (1) angeordneten Achsschenkel (11) zur Drehlagerung eines Fahrzeugrades und der Bremstrommel (51) einer Fahrzeugbremse, einem mit dem Achsschenkel (11) fest verbundenen Bremsträger, an dem gegen die Bremstrommel (51) spreizbare Bremsbacken gelagert sind, einer sich parallel zum Achsschenkel (11) erstreckenden Betätigungswelle (55) zum Spreizen der Bremsbacken, die in Bezug auf den Bremsträger drehbeweglich angeordnet und hierzu drehbeweglich in einem bremsträgerfesten Rohr (65) angeordnet ist, und einem Kraftglied (60) zum Antrieb der Betätigungswelle (55), welches an einer Trägerkonsole (64) angeordnet ist, die über mindestens eine Verschraubung (70) mit dem Bremsträger verbunden ist, wobei Bestandteile der Verschraubung (70) ein erstes und zweites Lochraster (71, 72) sind, mittels dessen die Trägerkonsole (64) in mehr als einer Position mit dem Bremsträger verbindbar ist, **gekennzeichnet durch** eine an dem fahrzeuginneren Ende des Rohrs (65) befestigte Flanschplatte (68) mit einem ersten Lochraster (71), und eine sich aus einem ersten Konsolenschenkel (81), an dem das zweite Lochraster (72) ausgebildet ist, und einem rechtwinklig zu dem ersten Konsolenschenkel (81) angeordneten zweiten Konsolenschenkel (82) zusammensetzende Trägerkonsole (64), wobei das Kraftglied (60) an dem zweiten Konsolenschenkel (82) befestigt ist.

2. Fahrzeugachse nach Anspruch 1, **dadurch gekennzeichnet, dass** das Kraftglied (60) ein druckluftbetriebener Bremszylinder ist.

3. Fahrzeugachse nach Anspruch 1, **dadurch gekennzeichnet, dass** der Achsschenkel (11) und der Bremsträger an einem Radträger (10) befestigt sind, und dass der Radträger (10) über ein Lenklager (7) schwenkbar am Ende des Achskörpers (1) angeordnet ist.

4. Fahrzeugachse nach einem der Ansprüche 1 bis 3, **dadurch gekennzeichnet, dass** die Flanschplatte (68) an dem fahrzeuginneren Ende des bremsträgerfesten Rohrs (65) durch Verschweißen mit dem Rohr (65) befestigt ist.

5. Fahrzeugachse nach Anspruch 4, **dadurch gekennzeichnet, dass** die Flanschplatte (68) mit einer Öffnung oder einer Ausnehmung versehen ist, durch die die Betätigungswelle (55) hindurchgeführt ist.

6. Fahrzeugachse nach einem der vorangehenden Ansprüche, **dadurch gekennzeichnet, dass** das Lochraster durch eine Lochreihe (71, 72) gebildet wird, die längs eines Kreisbogens angeordnet ist, dessen Kreismittelpunkt mit der Drehachse (A2) der Betätigungswelle (55) zusammenfällt.

7. Fahrzeugachse nach Anspruch 6, **dadurch gekennzeichnet, dass** die Löcher (75) der Lochreihe (71, 72) gleiche Abstände zueinander aufweisen.

8. Fahrzeugachse nach Anspruch 7, **gekennzeichnet durch** eine erste bremsträgerseitige Lochreihe (71), und eine zweite, an der Trägerkonsole (64) ausgebildete Lochreihe (72), wobei die Lochabstände der ersten Lochreihe (71) identisch den Lochabständen der zweiten Lochreihe (72) sind.

9. Fahrzeugachse nach einem der vorangehenden Ansprüche, **gekennzeichnet durch** mindestens eine rechtwinklig zu den beiden Konsolenschenkeln (81, 82) angeordnete Versteifungsrippe (83).

## Claims

1. Vehicle axle having an axle beam (1), a steering knuckle (11) which is arranged in an extension of the axle beam (1) for rotatably mounting a vehicle wheel and the brake drum (51) of a vehicle brake, a brake carrier which is connected fixedly to the steering knuckle (11) and on which brake shoes which can be spread against the brake drum (51) are mounted, an actuating shaft (55) which extends parallel to the steering knuckle (11) for spreading the brake shoes, which actuating shaft (55) is arranged such that it can be moved rotationally in relation to the brake carrier and to this end is arranged such that it can be moved rotationally in a tube (65) which is fixed on the brake carrier, and a force member (60) for driving the actuating shaft (55), which force member (60) is arranged on a carrier bracket (64) which is connected via at least one screw connection (70) to the brake carrier, constituent parts of the screw connection (70) being a first and second hole pattern (71, 72), by means of which the carrier bracket (64) can be connected to the brake carrier in more than one position, **characterized by** a flange plate (68) with a first hole pattern (71), which flange plate (68) is fastened to that end of the tube (65) which is on the inside of the vehicle, and a carrier bracket (64) which is composed of a first bracket limb (81), on which the second hole pattern (72) is configured, and a second bracket limb (82) which is arranged at a right angle with respect to the first bracket limb (81), the force member (60) being fastened to the second bracket limb (82).

2. Vehicle axle according to Claim 1, **characterized in that** the force member (60) is a brake cylinder which is operated by compressed air.

3. Vehicle axle according to Claim 1, **characterized in that** the steering knuckle (11) and the brake carrier are fastened to a wheel support (10), and **in that** the wheel support (10) is arranged at the end of the axle beam (1) such that it can be pivoted via a steering bearing (7).

4. Vehicle axle according to one of Claims 1 to 3, **characterized in that** the flange plate (68) is fastened to the end on the inside of the vehicle of the tube (65) which is fixed on the brake carrier, by way of welding to the tube (65).

5. Vehicle axle according to Claim 4, **characterized in that** the flange plate (68) is provided with an opening or a recess, through which the actuating shaft (55) is guided.

6. Vehicle axle according to one of the preceding claims, **characterized in that** the hole pattern is formed by way of a hole row (71, 72) which is arranged along a circular arc, the circle centre of which coincides with the rotational axis (A2) of the actuating shaft (55).

7. Vehicle axle according to Claim 6, **characterized in that** the holes (75) of the hole row (71, 72) are at identical spacings from one another.

8. Vehicle axle according to Claim 7, **characterized by** a first brake carrier-side hole row (71), and a second hole row (72) which is configured on the carrier bracket (64), the hole spacings of the first hole row (71) being identical to the hole spacings of the second hole row (72).

9. Vehicle axle according to one of the preceding claims, **characterized by** at least one reinforcing rib (83) which is arranged at a right angle with respect to the two bracket limbs (81, 82).

## Revendications

1. Essieu de véhicule comprenant un corps d'essieu (1), une fusée d'essieu (11) disposée dans le prolongement du corps d'essieu (1) pour le support rotatif d'une roue de véhicule et du tambour de frein (51) d'un frein de véhicule, un support de frein relié fixement à la fusée d'essieu (11), sur lequel sont supportées des mâchoires de frein pouvant être écartées contre le tambour de frein (51), un arbre d'actionnement (55) s'étendant parallèlement à la fusée d'essieu (11) pour écarter les mâchoires de frein, lequel est disposé de manière déplaçable en rotation par rapport au support de frein et est disposé pour cela de manière déplaçable en rotation dans un tube (65) fixé au support de frein, et un organe de force (60) pour l'entraînement de l'arbre d'actionnement (55), lequel est disposé au niveau d'une console de support (64) qui est reliée au support de frein par le biais d'au moins un vissage (70), des composants du vissage (70) étant un premier et un deuxième motif de trous (71, 72) au moyen desquels la console de support (64) peut être reliée au support de frein en plus d'une position, **caractérisé par** une plaque de bride (68) fixée à l'extrémité du tube (65) du côté intérieur du véhicule par un premier motif de trous (71) et par une console de support (64) se composant d'une première branche de console (81) sur laquelle est réalisé le deuxième motif de trous (72) et d'une deuxième branche de console (82) disposée à angle droit par rapport à la première branche de console (81), l'organe de force (60) étant fixé à la deuxième branche de console (82).

2. Essieu de véhicule selon la revendication 1, **caractérisé en ce que** l'organe de force (60) est un cylindre de frein commandé par air comprimé.

3. Essieu de véhicule selon la revendication 1, **caractérisé en ce que** la fusée d'essieu (11) et le support de frein sont fixés sur un support de roue (10) et **en ce que** le support de roue (10) est disposé à l'extrémité du corps d'essieu (1) de manière à pouvoir pivoter par rapport à un palier de direction (7).

4. Essieu de véhicule selon l'une quelconque des revendications 1 à 3, **caractérisé en ce que** la plaque de bride (68) est fixée à l'extrémité du tube (65) fixé au support de frein, à l'intérieur du véhicule, par soudage au tube (65).

5. Essieu de véhicule selon la revendication 4, **caractérisé en ce que** la plaque de bride (68) est pourvue d'une ouverture ou d'un évidement à travers lequel ou laquelle est guidé l'arbre d'actionnement (55).

6. Essieu de véhicule selon l'une quelconque des revendications précédentes, **caractérisé en ce que** le motif de trous est formé par une rangée de trous (71, 72) qui est disposée le long d'un arc de cercle dont le centre coïncide avec l'axe de rotation (A2) de l'arbre d'actionnement (55).

7. Essieu de véhicule selon la revendication 6, **caractérisé en ce que** les trous (75) de la rangée de trous (71, 72) présentent les mêmes espacements les uns des autres.

8. Essieu de véhicule selon la revendication 7, **caractérisé par** une première rangée de trous (71) du côté du support de frein et une deuxième rangée de trous (72) réalisée au niveau de la console de support (64), les espacements entre les trous de la première rangée de trous (71) étant identiques aux espacements entre les trous de la deuxième rangée de trous (72).

9. Essieu de véhicule selon l'une quelconque des revendications précédentes, **caractérisé par** au moins une nervure de renforcement (83) disposée à angle droit par rapport aux deux branches de console (81, 82).
